# EUROPEAN PATENT APPLICATION

(11) **EP 4 832 486 A1**
(43) Date of publication of application: **28.10.2026**
(21) Application number: 25220979.6
(22) Date of filing: 05.12.2025
(51) Int. Cl.: H04N 19/14, H04N 19/176, H04N 19/154, H04N 19/119

(54) **HARDWARE FRIENDLY BLOCK PARTITION COMBINATION DECISION IN VIDEO ENCODING**

(30) Priority: 24.04.2025 US 202519188676
(71) Applicant: INTEL Corporation, Santa Clara, CA 95054 (US)
(72) Inventor: ZHANG, Ximin, San Jose, 95129 (US); CHIU, Yi-Jen, San Jose, 95129 (US); ROWE, Keith, Shingle Springs, 95682 (US)
(74) Representative: Viering, Jentschura & Partner mbB Patent- und Rechtsanwälte

(57) **Abstract**

To effectively reduce complexity and enable hardware friendly encoding, a technique can be implemented strategically select a partition combination from a group of one or more predetermined partition combinations based on a sharpness value of a CTU and optionally a temporal variation value of the CTU. Appropriate thresholding can be applied to the sharpness value and/or the temporal variation value when selecting the partition combination. One or more thresholds used can adapt to the QP used for encoding. In some cases, the one or more thresholds used can adapt to the sharpness value. Selecting the partition combination from the group can reduce the computation associated with finding an optimal block partition and corresponding coding tools for the CUs in the CTU.

## Description

### Background

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format. An encoder-decoder system is called a codec.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4 illustrates partitioning, according to some embodiments of the disclosure.
FIG. 5 illustrates Intra-prediction modes, according to some embodiments of the disclosure.
FIG. 6 illustrates partition combination decision and encoding, according to some embodiments of the disclosure.
FIG. 7 is a flow diagram illustrating a method for encoding a coding tree unit (CTU), according to some embodiments of the disclosure.
FIG. 8 is a flow diagram illustrating a method for determining one or more thresholds based on a quantization parameter (QP) and a sharpness value, according to some embodiments of the disclosure.
FIG. 9 is a flow diagram illustrating a method for selecting a partition combination, according to some embodiments of the disclosure.
FIG. 10 is a flow diagram illustrating a method for selecting a partition combination, according to some embodiments of the disclosure.
FIG. 11 is a flow diagram illustrating a method for selecting a partition combination, according to some embodiments of the disclosure.
FIG. 12 depicts a block diagram of an exemplary computing device, according to some embodiments of the disclosure.

### Detailed Description

### Overview

Video coding or video compression is the process of compressing video data for storage, transmission, and playback. Video compression may involve taking a large amount of raw video data and applying one or more compression techniques to reduce the amount of data needed to represent the video while maintaining an acceptable level of visual quality. In some cases, video compression can offer efficient storage and transmission of video content over limited bandwidth networks.

A video includes one or more (temporal) sequences of video frames or frames. Frames having larger frame indices or which are associated with later timestamps relative to a current frame may be considered frames in the forward direction relative to the current frame. Frames having smaller frame indices or which are associated with previous timestamps relative to a current frame may be considered frames in the backward direction relative to the current frame. A frame may include an image, or a single still image. A frame may have millions of pixels. For example, a frame for an uncompressed 4K video may have a resolution of 3840x2160 pixels. Pixels may have luma/luminance and chroma/chrominance values. The terms "frame" and "picture" may be used interchangeably.

There are several frame types of picture types. I-frames or Intra-frames may be least compressible and do not depend on other frames to decode. I-frames may include scene change frames. An I-frame may be a reference frame for one or more other frames. P-frames may depend on data from previous frames to decode and may be more compressible than I-frames. A P-frame may be a reference frame for one or more other frames. B-frames may depend on data from previous and forward frames to decode and may be more compressible than I-frames and P-frames. A B-frame can refer to two or more frames, such as one frame in the future and one frame in the past. Other frame types may include reference B-frame and non-reference B-frame. Reference B-frame can act as a reference for another frame. A non-reference B-frame is not used as a reference for any frame. Reference B-frames are stored in a decoded picture buffer whereas a non-reference B-frame does not need to be stored in the decoded picture buffer. P-frames and B-frames may be referred to as Inter-frames. The order or encoding hierarchy in which I-frames, P-frames, and B-frames are arranged may be referred to as a group of pictures (GOP). In some cases, a frame may be an instantaneous decoder refresh (IDR) frame within a GOP. An IDR-frame can indicate that no frame after the IDR-frame can reference any frame before the IDR-frame. Therefore, an IDR-frame may signal to a decoder that the decoder may clear the decoded picture buffer. Every IDR-frame may be an I-frame, but an I-frame may or may not be an IDR-frame. A closed GOP may begin with an IDR-frame. A slice may be a spatially distinct region of a frame that is encoded separately from any other region in the same frame.

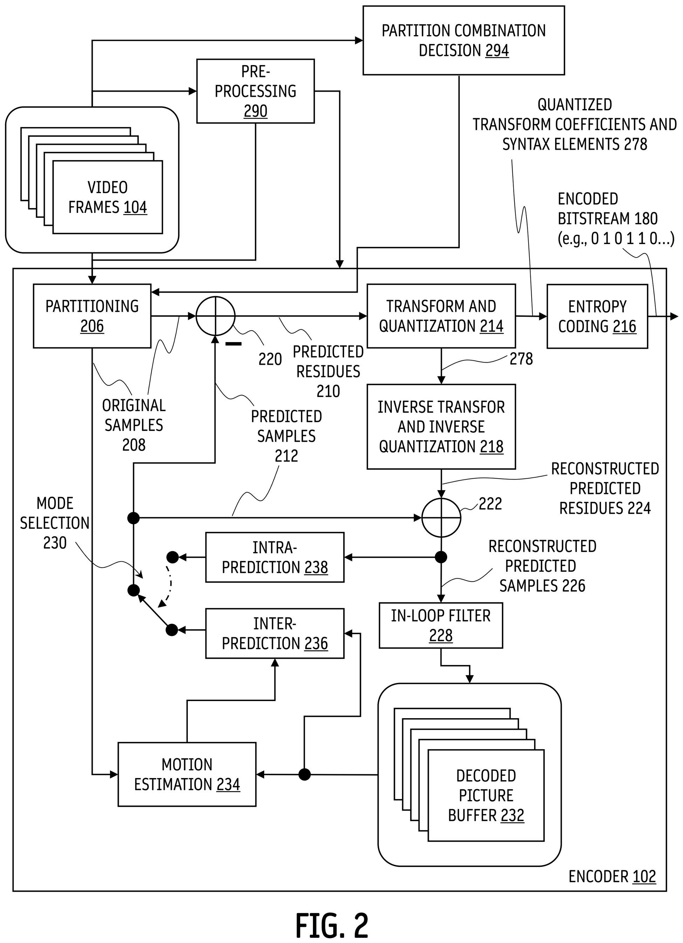

Some recent released codecs can achieve ^{~}50% subjective quality improvement with similar bitrates, offering significant technical advantages over earlier codecs. However, the encoding and decoding complexity of the codecs has increased significantly. The encoding and decoding complexity increase is due to the new added block partitions and coding tools. During encoding (as illustrated in FIG. 2), a frame may be partitioned into one or more blocks, where blocks are used for block-based video compression. The manner in which a larger block is partitioned into smaller blocks is referred to as a partition or a partition pattern. A block may include a square or non-square/rectangular region of a frame. Various video compression techniques may use different terminology for the blocks or different partitioning structures for creating the blocks. In some video compression techniques, a frame may be partitioned into CTUs. In some techniques, CTUs may be referred to as superblocks or macroblocks. A CTU can be 32x32 pixels, 64x64 pixels, 128x128 pixels, or larger in size. A CTU may be recursively divided (separately for luma and chroma components) into coding units (CUs) or smaller blocks, e.g., according to a tree structure. A CU can have a size of 128x128, 64x64 pixels, 32x32 pixels, 16x16 pixels, 8x16 pixels, 16x8 pixels, 8x8 pixels, 8x4 pixels, or 4x4 pixels. Each leaf node of this partitioning structure becomes a CU. These CUs serve as the units for applying prediction (either Intra-prediction or Inter-prediction) and transform coding.

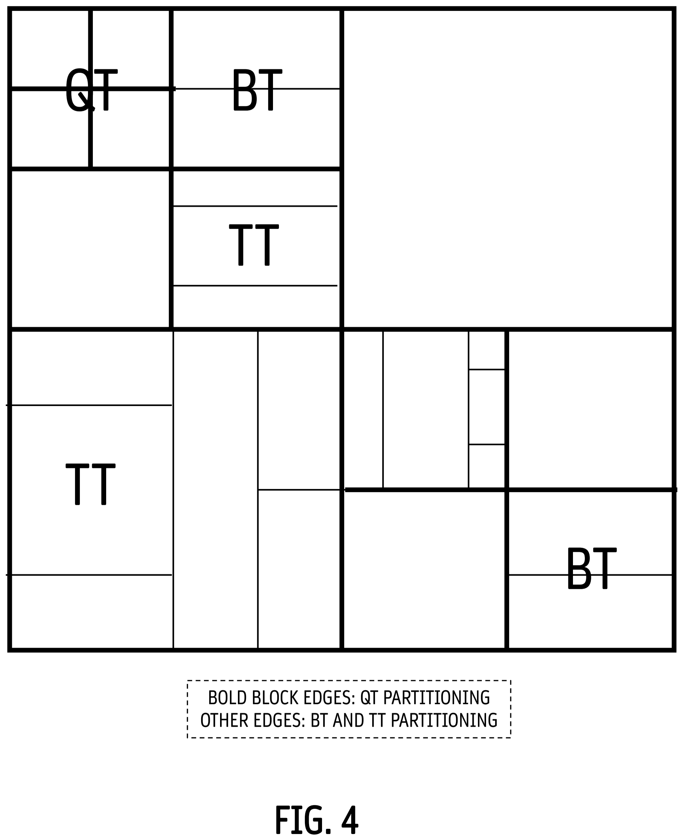

FIG. 4 illustrates partitioning at CTU into CUs, according to some embodiments of the disclosure. As seen in FIG. 4, a codec can allow flexible quad-tree (QT) partitioning with nested multi-type tree (QT+MTT) partitioning. This allows each CTU to be recursively split using quad-tree partitioning down to a minimum size, after which further splits can occur using binary tree (BT) and ternary tree (TT) structures. Quad-tree splits can divide a block into four equal-sized squares. Binary tree splits can divide a block into two equal parts horizontally or vertically. Ternary tree splits can divide a block into three parts with the middle part being twice the size as the other two. The recursive splitting of the CTU can greatly increase the partitioning adaptability to various content types. Starting with a 128×128 CTU, the codec may first apply QT partitioning down to a minimum allowed size (often 4×4 or 8×8), after which further BT and TT splits can be applied. Each split decision creates new nodes in the partition tree, and each of these nodes has multiple potential split options. Mathematical analysis shows that the number of possible partitioning combinations grows exponentially with CTU size. The possible partitioning patterns for a 128×128 CTU is in the order of billions or even trillions of combinations.

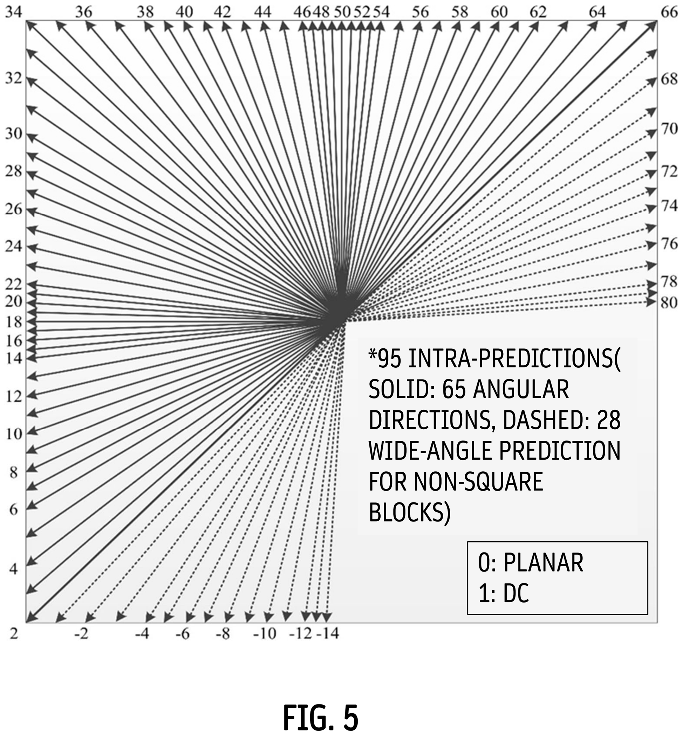

FIG. 5 illustrates Intra-prediction modes, according to some embodiments of the disclosure. In one codec, 95 Intra-prediction modes can be supported as possible coding tools for a CU. A given CU can be Intra-predicted using one of 95 possible Intra-prediction modes. The 95 Intra-prediction modes can include 65 (traditional) angular modes, 1 direct current (DC) mode, 1 planar mode, plus 28 wide-angle modes for non-square CUs.

To find the optimal partitioning and coding tool (e.g., Intra-prediction modes) for a CTU, the encoder computes the bitrate and distortion of many feasible combinations of the block partitions and corresponding coding tools. Such computations caused significant and dramatic increase in complexity. In some complexity comparisons between reference code of two different codecs, the Intra-encoding runtime of the codec is more than 20 times slower than an earlier codec, and Inter-encoding runtime of the codec is more than 7 times slower than the earlier codec.

Reducing encoding complexity can make the encoder encoding videos faster and allow the encoder to be used in more applications. Also, reducing encoding complexity can make it easier for the encoding process to be carried out in hardware circuitry implementing video encoding pipelines. Some early skip heuristics-based methods can be implemented to reduce complexity. However, these early skip methods are designed for software encoding and include lots of on-the-fly decisions. The complexity for worst-case scenario is still the same and the hardware pipeline can be difficult to design accordingly. As a result, the early skip methods may only provide very minor performance improvement for hardware-based encoding. While machine learning methods can analyze the block statistics and reduce the number of partition candidates, the methods are still software oriented. From the hardware perspective, there is no gate count reduction and worst-case complexity reduction.

To more effectively reduce complexity and enable hardware friendly encoding, a technique can be implemented strategically select a partition combination from a group of one or more predetermined partition combinations based on a sharpness value of a CTU and optionally a temporal variation value of the CTU. A partition combination can include one or more predetermined candidate partitions. The sharpness value and/or the temporal variation value may be extracted in a pre-analysis process. They can represent the temporal and spatial variability of the CTU. Appropriate thresholding can be applied to the sharpness value and/or the temporal variation value when selecting the partition combination. One or more thresholds used can adapt to the QP used for encoding. In some cases, the one or more thresholds used can adapt to the sharpness value. Selecting the partition combination from the group can reduce the computation associated with finding an optimal block partition and corresponding coding tools for the CUs in the CTU.

In some embodiments, to select a partition combination, a threshold may be compared against a sharpness value determined for a CTU. In some embodiments, to select a partition combination, a threshold may be compared against a temporal variation value determined for a CTU. One or more sharpness values determined for a CTU may be used to compare against one or more thresholds to select the partition combination for the CTU from a group of one or more (fixed) predetermined partition combinations. One or more temporal variation values determined for a CTU may be used to compare against one or more thresholds to select the partition combination for the CTU from a group of one or more (fixed) predetermined partition combinations. One or more thresholds may include one or more of: one or more thresholds associated with Inter-prediction partitioning and one or more thresholds associated with Intra-prediction partitioning.

In some embodiments, the encoder can perform rate-distortion optimization of the one or more predetermined candidate partitions of the selected partition combination. Finally, the encoder can select a partition to use for encoding the CTU from the one or more predetermined candidate partitions of the partition combination based on the rate-distortion optimization. The encoding complexity is dramatically reduced when the possible partitions and corresponding coding tools are cut down through the partition combination decision process. Phrased differently, fewer partitions and coding tools are evaluated by the encoder.

Even though encoding complexity is reduced, the partition combination decision can be made to maintain the quality gain at the same time. The sharpness value and/or the temporal variation value can serve as effective indicators for selecting an optimal partition combination for further evaluation by the encoder. Moreover, the QP and the sharpness value may modify the threshold to make the partition combination decision adaptive to the content and the encoding process. A partition combination would include a (fixed and predetermined) reduced set of possible partitions of the CTU. Accordingly, a dedicated hardware video encoding pipeline can be designed and implemented to support the encoding for the partition combination with predetermined/fixed partitions, with a very small gate count increase.

In some experiments involving encoding of video clips with different resolution and different characteristics, the partition combination decision technique can achieve significant complexity reduction with very small or negligible quality impacts.

Adaptive partition combination decision techniques described and illustrated herein may be applied to a variety of codecs, such as AVC (Advanced Video Coding), HEVC (High Efficiency Video Coding), AV1 (AOMedia Video 1), AV2 (AOMedia Video 2), VVC (Versatile Video Coding), and VP9. AVC, also known as "ITU-T H.264", was approved in 2003 and last revised on 2024-08-13. HEVC, also known as "ITU-T H.265", was approved in 2013 and last revised on 2024-04-03. AV1 is a video coding codec designed for video transmissions over the Internet. "AV1 Bitstream & Decoding Process Specification" version 1.1.1 with Errata was last modified in 2019. AV2 is in development. VVC, also known as "ITU-T H.266", was finalized in 2020 and last revised on 2023-09-29. VP9 is an open video codec which became available on 2013-06-17 and is last revised in October 2023.

### Video compression

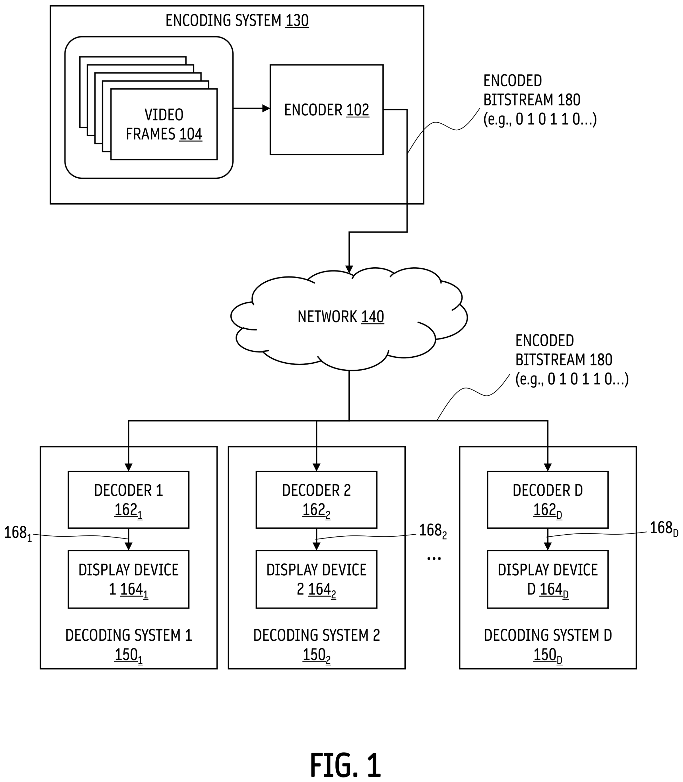

FIG. 1 illustrates encoding system 130 and one or more decoding systems 150_{1...D}, according to some embodiments of the disclosure.

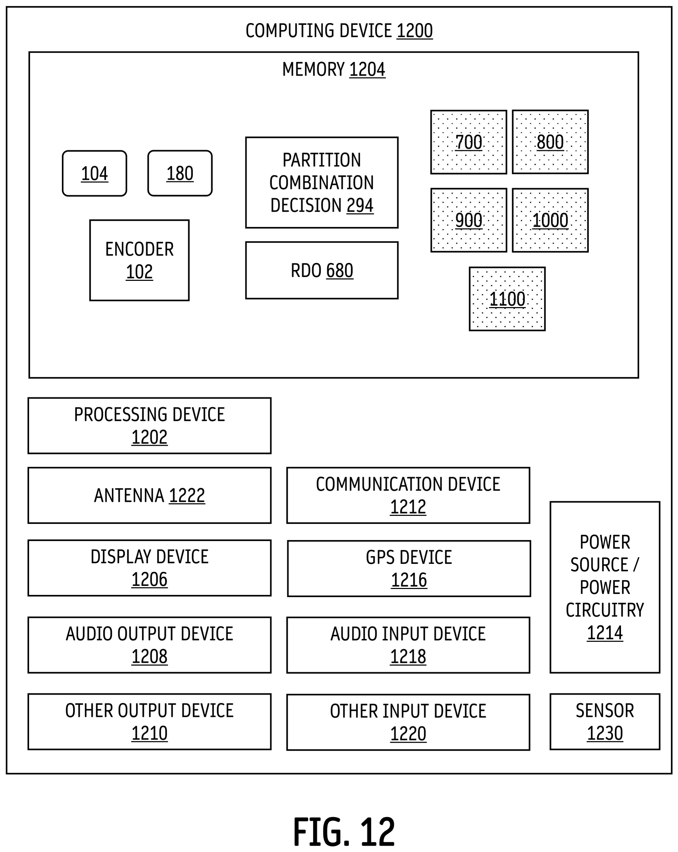

Encoding system 130 may be implemented on computing device 1200 of FIG. 12. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer-screen content, video conferencing content, live event broadcast content, sports content, a surveillance video, a video shot using a mobile computing device (e.g., a smartphone), etc. In some cases, video may include a mix or combination of different types of video.

Encoding system 130 may include encoder 102 that receives video frames 104 and encodes video frames 104 into encoded bitstream 180. An exemplary implementation of encoder 102 is illustrated in FIG. 2.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may include packets, where encoded video data and signaling information may be packetized. One exemplary format is the Open Bitstream Unit (OBU), which is used in AV1 encoded bitstreams. An OBU may include a header and a payload. The header can include information about the OBU, such as information that indicates the type of OBU. Examples of OBU types may include sequence header OBU, frame header OBU, metadata OBU, temporal delimiter OBU, and tile group OBU. Payloads in OBUs may carry quantized transform coefficients and syntax elements that may be used in the decoder to properly decode the encoded video data to regenerate video frames.

Encoded bitstream 180 may be transmitted to one or more decoding systems 150_{1...D}, via network 140. Network 140 may be the Internet. Network 140 may include one or more of: cellular data networks, wireless data networks, wired data networks, cable Internet networks, fiber optic networks, satellite Internet networks, etc.

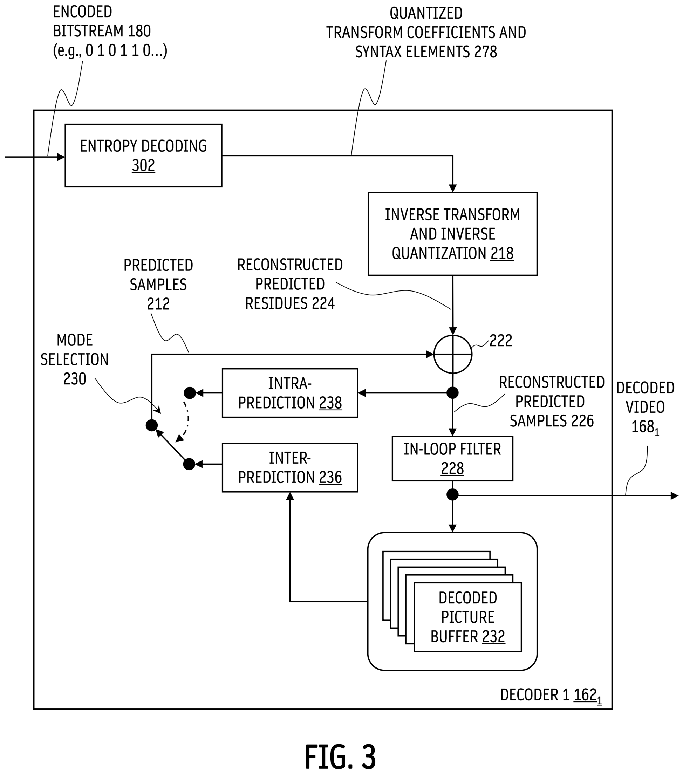

D number of decoding systems 150_{1...D} are illustrated. At least one of the decoding systems 150_{1...D} may be implemented on computing device 1200 of FIG. 12. Examples of systems 150_{1...D} may include personal computers, mobile computing devices, gaming devices, augmented reality devices, mixed reality devices, virtual reality devices, televisions, etc. Each one of decoding systems 150_{1...D} may perform the process of decoding in video compression. Each one of decoding systems 150_{1...D} may include a decoder (e.g., decoder 1...D 162_{1...D}), and one or more display devices (e.g., display device 1...D 164_{1...D}). An exemplary implementation of a decoder, e.g., decoder 1 162₁, is illustrated in FIG. 3.

For example, decoding system 1 150₁, may include decoder 1 162₁ and a display device 1 164₁. Decoder 1 162₁ may implement a decoding process of video compression. Decoder 1 162₁ may receive encoded bitstream 180 and produce decoded video 168₁. Decoded video 168₁ may include a series of video frames, which may be a version or reconstructed version of video frames 104 encoded by encoding system 130. Display device 1164₁ may output the decoded video 168₁ for display to one or more human viewers or users of decoding system 1 150₁.

For example, decoding system 2 150₂, may include decoder 2 162₂ and a display device 2 164₂. Decoder 2 162₂ may implement a decoding process of video compression. Decoder 2 162₂ may receive encoded bitstream 180 and produce decoded video 168₂. Decoded video 168₂ may include a series of video frames, which may be a version or reconstructed version of video frames 104 encoded by encoding system 130. Display device 2 164₂ may output the decoded video 168₂ for display to one or more human viewers or users of decoding system 2 150₂.

For example, decoding system D 150_{D}, may include decoder D 162_{D} and a display device D 164_{D}. Decoder D 162_{D} may implement a decoding process of video compression. Decoder D 162_{D} may receive encoded bitstream 180 and produce decoded video 168_{D}. Decoded video 168_{D} may include a series of video frames, which may be a version or reconstructed version of video frames 104 encoded by encoding system 130. Display device D 164_{D} may output the decoded video 168_{D} for display to one or more human viewers or users of decoding system D 150_{D}.

### Video encoder

FIG. 2 illustrates encoder 102 to encode video frames 104 and output an encoded bitstream, according to some embodiments of the disclosure. Encoder 102 may include one or more of: signal processing operations and data processing operations, including Inter and Intra-prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encode video frames 104 into encoded bitstream 180. Encoder 102 may include one or more of partitioning 206, transform and quantization 214, inverse transform and inverse quantization 218, in-loop filter 228, motion estimation 234, Inter-prediction 236, Intra-prediction 238, and entropy coding 216.

In some embodiments, video frames 104 may be processed by partition combination decision 294 to select a partition combination from a group of predetermined partition combinations to be evaluated by encoder 102. A partition combination can include one or more predetermined candidate partitions. Partitioning 206 can partition video frames 104 according to the one or more predetermined candidate partitions. Various coding tools for the one or more predetermined candidate partitions can be evaluated by encoder 102.

In some embodiments, video frames 104 may be processed by pre-processing 290 before encoder 102 applies an encoding process. Pre-processing 290 and encoder 102 may form encoding system 130 as seen in FIG. 1. Pre-processing 290 may analyze video frames 104 to determine picture statistics that may be used to inform one or more encoding processes to be performed by one or more components in encoder 102. Pre-processing 290 may determine information that may be used for quantization (QP) adaptation, scene cut detection, and frame type adaptation. Pre-processing 290 may determine for each frame, a recommended frame type. Pre-processing 290 may apply motion compensated temporal filtering (MCTF) to denoise video frames 104. Filtered versions of video frames 104 with MCTF applied may be provided to encoder 102 as the input video frames (instead of video frames 104), e.g., to partitioning 206. MCTF may include a motion estimation analysis operation and a bilateral filtering operation. MCTF may attenuate random picture components in a motion aware fashion to improve coding efficiency. MCTF may operate on blocks of 8x8 pixels, or 16x16 pixels. MCTF may operate separately on luminance values and chroma values. MCTF may be applied in three dimensions (e.g., spatial directions and a temporal direction). MCTF may produce a noise estimate of various blocks. In some embodiments, one or more operations of pre-processing 290 may be implemented as software instructions being executed by a processor. In some embodiments, one or more operations of pre-processing 290 may be implemented using computing circuitry designed to perform the one or more operations in hardware.

Partitioning 206 may divide a frame in video frames 104 (or filtered version of video frames 104 from pre-processing 290) into blocks of pixels. Different codecs may allow different variable range of block sizes. In one codec, a frame may be partitioned by partitioning 206 into blocks of various sizes, e.g., 128x128, 64x64 pixels, 32x32 or 16x16 pixels. Large blocks may be referred to as superblocks, macroblocks, or CTUs. Partitioning 206 may further divide each large block using a multi-way partition tree structure. In some cases, a large block can be recursively divided further by partitioning 206 using the multi-way partition tree structure (e.g., down to smaller blocks such as 4x4 size blocks). In one codec, a frame may be partitioned by partitioning 206 into CTUs of size 128x128 pixels. Partitioning 206 may divide a CTU using a QT partitioning structure into four CUs. Partitioning 206 may further recursively divide a CU using the QT partitioning structure. Partitioning 206 may (further) subdivide a CU using a multi-type tree structure (e.g., a QT, a BT, or a TT structure, as illustrated in FIG. 4). A smallest CU may have a size of 4x4 pixels. A CU may be referred to herein as a block. Partitioning 206 may output original samples 208, e.g., as blocks of pixels.

In some cases, one or more operations in partitioning 206 may be implemented in Intra-prediction 238 and/or Inter-prediction 236.

Intra-prediction 238 may predict samples of a block from reconstructed predicted samples of previously encoded spatial neighboring/reference blocks of the same frame. Intra-prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-prediction 238 may determine a suitable predictor for predicting the samples from reconstructed predicted samples of previously encoded spatial neighboring/reference blocks of the same frame (thus making an Intra-prediction decision). Intra-prediction 238 may generate predicted samples 212 generated using the suitable predictor. Intra-prediction 238 may output or identify the neighboring/reference block and a predictor used in generating the predicted samples 212. The identified neighboring/reference block and predictor may be encoded in the encoded bitstream 180 to enable a decoder to reconstruct a block using the same neighboring/reference block and predictor. In one codec, Intra-prediction 238 may support a number of diverse predictors, e.g., 56 different predictors. In one codec, Intra-prediction 238 may support a number of diverse predictors, e.g., 95 different predictors. Some predictors, e.g., directional predictors, may capture different spatial redundancies in directional textures. Pixel values of a block can be predicted using a directional predictor in Intra-prediction 238 by extrapolating pixel values of a neighboring/reference block along a certain direction. Intra-prediction 238 of different codecs may support different sets of predictors to exploit different spatial patterns within the same frame. Examples of predictors may include direct current (DC), planar, Paeth, smooth, smooth vertical, smooth horizontal, recursive-based filtering modes, chroma-from-luma, IBC, color palette or palette coding, multiple-reference line, Intra sub-partition, matrix-based Intra-prediction (matrix coefficients may be defined by offline training using neural networks), angular prediction, wide-angle prediction, cross-component linear model, template matching, etc. IBC works by copying a reference block within the same frame to predict a current block. Palette coding or palette mode works by using a color palette having a few colors (e.g., 2-8 colors), and encoding a current block using indices to the color palette. In some cases, Intra-prediction 238 may perform block-prediction, where a predicted block may be produced from a reconstructed neighboring/reference block of the same frame using a vector. Optionally, an interpolation filter of a certain type may be applied to the predicted block to blend pixels of the predicted block. Pixel values of a block can be predicted using a vector compensation process in Intra-prediction 238 by translating a neighboring/reference block (within the same frame) according to the vector (and optionally applying an interpolation filter to the neighboring/reference block) to produce predicted samples 212. Intra-prediction 238 may output or identify the vector applied in generating predicted samples 212. In some codecs, Intra-prediction 238 may encode (1) a residual vector generated from the applied vector and a vector predictor candidate, and (2) information that identifies the vector predictor candidate, rather than encoding the applied vector itself. Intra-prediction 238 may output or identify an interpolation filter type applied in generating predicted samples 212.

Motion estimation 234 and Inter-prediction 236 may predict samples of a block from samples of previously encoded frames, e.g., reference frames in decoded picture buffer 232. Motion estimation 234 and Inter-prediction 236 may perform operations to make Inter-prediction decisions. Motion estimation 234 may perform motion analysis and determine motion information for a current frame. Motion estimation 234 may determine a motion field for a current frame. A motion field may include motion vectors for blocks of a current frame. Motion estimation 234 may determine an average magnitude of motion vectors of a current frame. Motion estimation 234 may determine motion information, which may indicate how much motion is present in a current frame (e.g., large motion, very dynamic motion, small/little motion, very static).

Motion estimation 234 and Inter-prediction 236 may perform motion compensation, which may involve identifying a suitable reference block and a suitable motion predictor (or motion vector predictor) for a block and optionally an interpolation filter to be applied to the reference block. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames for determining one or more suitable motion predictors. A motion predictor may include a reference block and a motion vector that can be applied to generate a motion compensated block or predicted block. Motion predictors may include motion vectors that capture the movement of blocks between frames in a video. Motion estimation 234 may output or identify one or more reference frames and one or more suitable motion predictors. Inter-prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s). In one codec, motion estimation 234 may implement single reference frame prediction mode, where a single reference frame with a corresponding motion predictor is used for Inter-prediction 236. Motion estimation 234 may implement compound reference frame prediction mode where two reference frames with two corresponding motion predictors are used for Inter-prediction 236. In one codec, motion estimation 234 may implement techniques for searching and identifying good reference frame(s) that can yield the most efficient motion predictor. The techniques in motion estimation 234 may include searching for good reference frame(s) candidates spatially (within the same frame) and temporally (in previously encoded frames). The techniques in motion estimation 234 may include searching a deep spatial neighborhood to find a spatial candidate pool. The techniques in motion estimation 234 may include utilizing temporal motion field estimation mechanisms to generate a temporal candidate pool. The techniques in motion estimation 234 may use a motion field estimation process. After temporal and spatial candidates may be ranked and a suitable motion predictor may be determined. In one codec, Inter-prediction 236 may support a number of diverse motion predictors. Examples of predictors may include geometric motion vectors (complex, non-linear motion), warped motion compensation (affine transformations that capture non-translational object movements), overlapped block motion compensation, advanced compound prediction (compound wedge prediction, difference-modulated masked prediction, frame distance-based compound prediction, and compound Inter-Intra-prediction), dynamic spatial and temporal motion vector referencing, affine motion compensation (capturing higher-order motion such as rotation, scaling, and sheering), adaptive motion vector resolution modes, geometric partitioning modes, bidirectional optical flow, prediction refinement with optical flow, bi-prediction with weights, extended merge prediction, etc. Optionally, an interpolation filter of a certain type may be applied to the predicted block to blend pixels of the predicted block. Pixel values of a block can be predicted using the motion predictor/vector determined in a motion compensation process in motion estimation 234 and Inter-prediction 236 and optionally applying an interpolation filter. In some cases, Inter-prediction 236 may perform motion compensation, where a predicted block may be produced from a reconstructed reference block of a reference frame using the motion predictor/vector. Inter-prediction 236 may output or identify the motion predictor/vector applied in generating predicted samples 212. In some codecs, Inter-prediction 236 may encode (1) a residual vector generated from the applied vector and a vector predictor candidate, and (2) information that identifies the vector predictor candidate, rather than encoding the applied vector itself. Inter-prediction 236 may output or identify an interpolation filter type applied in generating predicted samples 212.

Mode selection 230 may be informed by components such as motion estimation 234 to determine whether Inter-prediction 236 or Intra-prediction 238 may be more efficient for encoding a block (thus making an encoding decision). Inter-prediction 236 may output predicted samples 212 of a predicted block. Inter-prediction 236 may output a selected predictor and a selected interpolation filter (if applicable) that may be used to generate the predicted block. Intra-prediction 238 may output predicted samples 212 of a predicted block. Intra-prediction 238 may output a selected predictor and a selected interpolation filter (if applicable) that may be used to generate the predicted block. Regardless of the mode, predicted residues 210 may be generated by subtractor 220 by subtracting original samples 208 by predicted samples 212. In some cases, predicted residues 210 may include residual vectors from Inter-prediction 236 and/or Intra-prediction 238.

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the Intra-prediction 238 and Inter-prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Examples of transform kernels may include horizontal and vertical forms of discrete cosine transform (DCT), asymmetrical discrete sine transform (ADST), flip ADST, and identity transform (IDTX), multiple transform selection, low-frequency non-separatable transform, subblock transform, non-square transforms, DCT-VIII, discrete sine transform VII (DST-VII), discrete wavelet transform (DWT), etc. Transforming may convert the predicted residues 210 into transform coefficients. Quantizing may quantize the transformed coefficients, e.g., by reducing the precision of the transform coefficients. Quantizing may include using quantization matrices (e.g., linear and non-linear quantization matrices) having quantization parameters or quantization step sizes. The elements in the quantization matrix can be larger for higher frequency bands and smaller for lower frequency bands, which means that the higher frequency coefficients are more coarsely quantized, and the lower frequency coefficients are more finely quantized. Quantizing may include dividing each transform coefficient by a corresponding element (e.g., a quantization parameter) in the quantization matrix and rounding to the nearest integer. Effectively, the quantization matrices may implement different QPs for different frequency bands and chroma planes and can use spatial prediction. A suitable quantization matrix can be selected and signaled for each frame and encoded in encoded bitstream 180. Transform and quantization 214 may output quantized transform coefficients and syntax elements 278 that indicate the coding modes and parameters used in the encoding process implemented in encoder 102.

Herein, a QP refers to a parameter in video encoding that controls the level of compression by determining how much detail is preserved or discarded during the encoding process. QP is directly associated with quantization step size. Larger step size may result in higher loss in information but smaller file sizes. Smaller step size may result in better preservation of information but larger file sizes. QPs can have values from 0 to 51. Lower QP values, ranging from 0 to 20, result in minimal compression, preserving more detail and quality in the video, but they also lead to larger file sizes. Mid-range QP values, between 21 and 35, strike a balance between video quality and file size, offering moderate compression that is suitable for most streaming applications where a balance between quality and bandwidth usage is needed. Higher QP values, from 36 to 51, apply more compression, leading to noticeable quality loss, but they significantly reduce file sizes, which is useful for low-bandwidth scenarios. The exact range and impact of QP values can vary depending on the specific encoding standard and the encoder settings. The QP value directly influences how the DCT coefficients are divided and rounded in transform and quantization 214. Larger QP values cause more aggressive rounding, effectively removing high frequency details that are less perceptible to human vision. This parameter is used in the rate-distortion optimization process of the encoder, allowing encoders to balance visual quality against bandwidth constraints. Modern encoders can dynamically adjust QP values at both frame and macroblock levels to optimize compression based on scene complexity and motion. In some cases, the adjustment to the QP is made to a base QP using a delta QP or a QP offset. Delta QP (or QP offset) is a mechanism in video encoding that allows for relative adjustments to the base QP value for specific coding units or frame types. These offsets enable transform and quantization 214 to apply different levels of compression to different parts of the video stream, optimizing the balance between quality and bitrate. For example, B-frames typically use higher QP values (positive delta) compared to I-frames since they're less critical for overall quality, while regions of high visual importance might receive negative delta QPs to preserve more detail. In many encoders, delta QPs can be configured for various structural elements like slice types, hierarchical coding layers, or specific regions of interest within frames. This granular control over quantization helps achieve better subjective quality by allocating more bits to visually significant content while maintaining efficient compression for less noticeable areas.

In some embodiments, the QPs used by transform and quantization 214 are determined by pre-processing 290. Pre-processing 290 may produce one or more quantization parameters to be used by transform and quantization 214.

Inverse transform and inverse quantization 218 may apply the inverse operations performed in transform and quantization 214 to produce reconstructed predicted residues 224 as part of a reconstruction path to produce decoded picture buffer 232 for encoder 102. Inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse DCT, inverse DWT, etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, Inter-prediction 236, and Intra-prediction 238.

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of in-loop filters may include constrained low-pass filter, directional deringing filter, edge-directed conditional replacement filter, loop restoration filter, Wiener filter, self-guided restoration filters, constrained directional enhancement filter (CDEF), LMCS filter, Sample Adaptive Offset (SAO) filter, Adaptive Loop Filter (ALF), cross-component ALF, low-pass filter, deblocking filter, etc. For example, applying a deblocking filter across a boundary between two blocks can resolve blocky artifacts caused by the Gibbs phenomenon. In some embodiments, in-loop filter 228 may fetch data from a frame buffer having reconstructed predicted samples 226 of various blocks of a video frame. In-loop filter 228 may determine whether to apply an in-loop filter or not. In-loop filter 228 may determine one or more suitable filters that achieve good visual quality and/or one or more suitable filters that suitably remove the artifacts introduced by the encoding process in encoder 102. In-loop filter 228 may determine a type of an in-loop filter to apply across a boundary between two blocks. In-loop filter 228 may determine one or more strengths of an in-loop filter (e.g., filter coefficients) to apply across a boundary between two blocks based on the reconstructed predicted samples 226 of the two blocks. In some cases, in-loop filter 228 may take a desired bitrate into account when determining one or more suitable filters. In some cases, in-loop filter 228 may take a specified QP into account when determining one or more suitable filters. In-loop filter 228 may apply one or more (suitable) filters across a boundary that separates two blocks. After applying the one or more (suitable) filters, in-loop filter 228 may write (filtered) reconstructed samples to a frame buffer such as decoded picture buffer 232.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180. Entropy coding 216 may implement some version of arithmetic coding. Different versions may have different pros and cons. In one codec, entropy coding 216 may implement (symbol to symbol) adaptive multi-symbol arithmetic coding. In another codec, entropy coding 216 may implement context-based adaptive binary arithmetic coder (CABAC). Binary arithmetic coding differs from multi-symbol arithmetic coding. Binary arithmetic coding encodes only a bit at a time, e.g., having either a binary value of 0 or 1. Binary arithmetic coding may first convert each symbol into a binary representation (e.g., using a fixed number of bits per-symbol). Handling just binary value of 0 or 1 can simplify computation and reduce complexity. Binary arithmetic coding may assign a probability to each binary value (e.g., a chance of the bit having a binary value of 0 and a chance of the bit having a binary value of 1). Multi-symbol arithmetic coding performs encoding for an alphabet having at least two or three symbol values and assigns a probability to each symbol value in the alphabet. Multi-symbol arithmetic coding can encode more bits at a time, which may result in a fewer number of operations for encoding the same amount of data. Multi-symbol arithmetic coding can require more computation and storage (since probability estimates may be updated for every element in the alphabet). Maintaining and updating probabilities (e.g., cumulative probability estimates) for each possible symbol value in multi-symbol arithmetic coding can be more complex (e.g., complexity grows with alphabet size). Multi-symbol arithmetic coding is not to be confused with binary arithmetic coding, as the two different entropy coding processes are implemented differently and can result in different encoded bitstreams for the same set of quantized transform coefficients and syntax elements 278.

### Video decoder

FIG. 3 illustrates decoder 1 162₁ to decode an encoded bitstream and output a decoded video, according to some embodiments of the disclosure. Decoder 1 162₁ may include one or more of: signal processing operations and data processing operations, including entropy decoding, inverse transform, inverse quantization, Inter and Intra-prediction, in-loop filtering, etc. Decoder 1 162₁ may have signal and data processing operations that mirror the operations performed in the encoder. Decoder 1 162₁ may apply signal and data processing operations that are signaled in encoded bitstream 180 to reconstruct the video. Decoder 1 162₁ may receive encoded bitstream 180 and generate and output decoded video 168₁ having a plurality of video frames. The decoded video 168₁ may be provided to one or more display devices for display to one or more human viewers. Decoder 1 162₁ may include one or more of entropy decoding 302, inverse transform and inverse quantization 218, in-loop filter 228, Inter-prediction 236, and Intra-prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180.

Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Inverse transform and inverse quantization 218 may output syntax elements 278 having signaling information for informing/instructing/controlling operations in decoder 1 162₁ such as mode selection 230, Intra-prediction 238, Inter-prediction 236, and in-loop filter 228.

Depending on the prediction modes signaled in the encoded bitstream 180 (e.g., as syntax elements in quantized transform coefficients and syntax elements 278), Intra-prediction 238 or Inter-prediction 236 may be applied to generate predicted samples 212.

Summer 222 may sum predicted samples 212 of a decoded reference block and reconstructed predicted residues 224 to produce reconstructed predicted samples 226 of a reconstructed block. For Intra-prediction 238, the decoded reference block may be in the same frame as the block that is being decoded or reconstructed. For Inter-prediction 236, the decoded reference block may be in a different (reference) frame in decoded picture buffer 232.

Intra-prediction 238 may determine a reconstructed vector based on a residual vector and a selected vector predictor candidate. Intra-prediction 238 may apply a reconstructed predictor or vector (e.g., in accordance with signaled predictor information) to the reconstructed block, which may be generated using a decoded reference block of the same frame. Intra-prediction 238 may apply a suitable interpolation filter type (e.g., in accordance with signaled interpolation filter information) to the reconstructed block to generate predicted samples 212.

Inter-prediction 236 may determine a reconstructed vector based on a residual vector and a selected vector predictor candidate. Inter-prediction 236 may apply a reconstructed predictor or vector (e.g., in accordance with signaled predictor information) to a reconstructed block, which may be generated using a decoded reference block of a different frame from decoded picture buffer 232. Inter-prediction 236 may apply a suitable interpolation filter type (e.g., in accordance with signaled interpolation filter information) to the reconstructed block to generate predicted samples 212.

In-loop filter 228 may receive reconstructed predicted samples 226. In-loop filter 228 may apply one or more filters signaled in the encoded bitstream 180 to the reconstructed predicted samples 226. In-loop filter 228 may output decoded video 168₁.

### Hardware friendly block partition decision

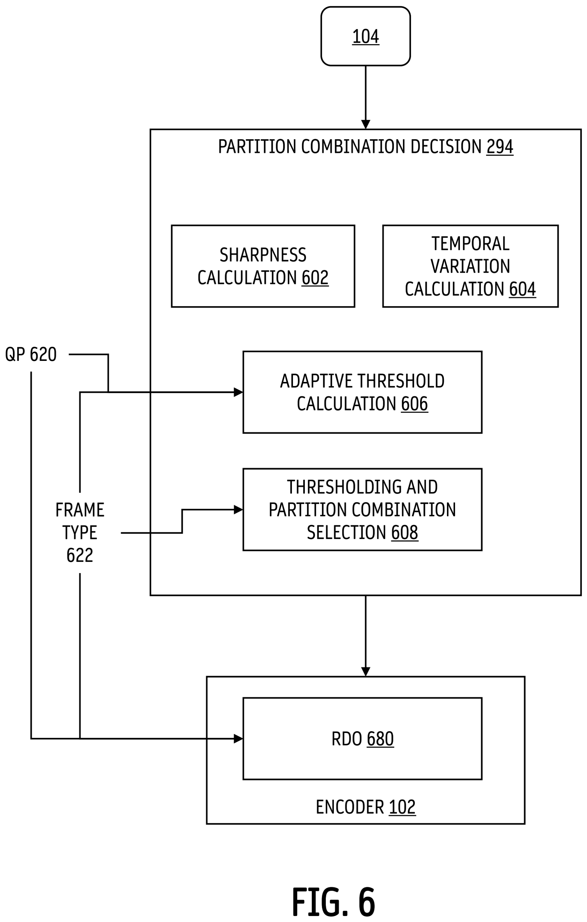

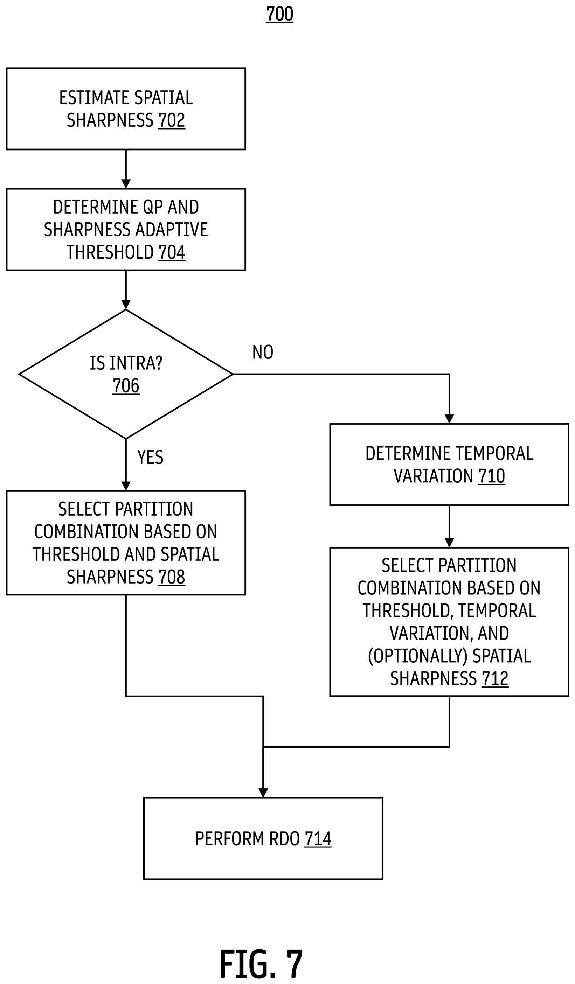

FIG. 6 illustrates partition combination decision 294 and encoder 102, according to some embodiments of the disclosure. One or more components shown in FIG. 6 may perform one or more operations of method 700 of FIG. 7 for encoding a CTU, according to some embodiments of the disclosure.

Partition combination decision 294 may receive video frames 104. Partition combination decision 294 may receive a CTU of a video frame in video frames 104. A CTU may be a 128x128 pixel block, or have a size determined by encoder 102. For the CTU, partition combination decision 294 may extract information about the CTU, such as one or more of one or more spatial sharpness features and temporal variation features. Based on the information about the CTU and by applying appropriate thresholding, partition combination decision 294 may output a partition combination selected from a group of predetermined/fixed partition combinations. The selected partition combination can be provided to encoder 102 to control the encoding process implemented by encoder 102.

Partition combination decision 294 may include sharpness calculation 602. Sharpness calculation 602 may determine a sharpness value of a CTU in a frame of video frames 104 to be encoded by encoder 102. Sharpness calculation 602 may perform estimate spatial sharpness in 702 of FIG. 7.

In some embodiments, sharpness calculation 602 may determine a block sharpness value for one or more (32x32) blocks of the CTU. A CTU of size 128x128 may have 16 32x32 blocks. A CTU of size 64x64 may have 4 32x32 blocks. Sharpness calculation 602 may determine a block sharpness value for a 32x32 block of the CTU. Sharpness calculation 602 may determine a block sharpness value for each 32x32 block of the CTU. A block sharpness value for a 32x32 block of the CTU, *Sᵢ*, can be calculated as follows: ${S}_{i} = \frac{1}{N} {\sum }_{x = 0}^{30} {\sum }_{y = 0}^{30} \left(\frac{\left|P\left(x, y\right)-P\left(x,y+1\right)\right|}{2}+\frac{\left|P\left(x, y\right)-P\left(x+1,y\right)\right|}{2}\right)$

*N* is a constant weight factor. *P*(*x, y*) denotes a pixel value in (*x, y*) position in the 32x32 block. The block sharpness value quantifies differences between two neighboring pixels in the 32x32 block (e.g., |(*P*(*x,y*) *- P*(*x,y* + 1)|, and |(*P*(*x,y) - P*(*x +* 1,*y*)|). In one implementation, *N* = 1024. The (spatial) sharpness value of the CTU, *S_{final},* is the maximum value among (all) the block sharpness values of the 32x32 blocks in the CTU: ${S}_{final} = {argmax}_{i} \left\{{S}_{i}\right\}$

In some embodiments, sharpness calculation 602 may calculate one or more sharpness values for one or more blocks of the coding tree unit. Sharpness calculation 602 may select a maximum sharpness value from the one or more sharpness values as the sharpness value of the coding tree unit.

In some cases, the sharpness value of the CTU may be the minimum value among the block sharpness values. In some cases, the sharpness value of the CTU may be the mean, mode, or median value among the block sharpness values. In some cases, the sharpness value of the CTU may be a characteristic value among the block sharpness values.

The one or more block sharpness values may be provided to thresholding and partition combination selection 608. The sharpness value for the CTU may be provided to thresholding and partition combination selection 608. The sharpness value for the CTU may be provided to adaptive threshold calculation 606.

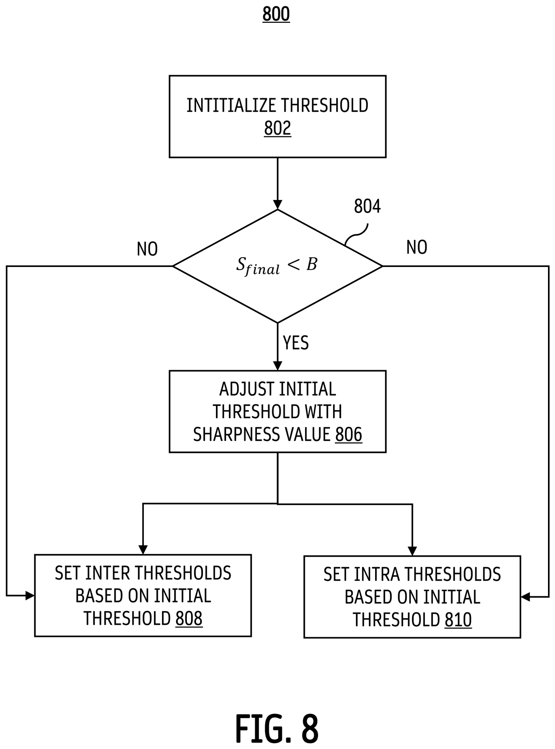

Partition combination decision 294 may include adaptive threshold calculation 606. Adaptive threshold calculation 606 may receive QP 620. Adaptive threshold calculation 606 may determine one or more thresholds based on QP 620. Adaptive threshold calculation 606 may determine one or more thresholds based on frame type 622. Adaptive threshold calculation 606 may determine one or more thresholds associated with Inter-prediction partitioning, e.g., a threshold associated with Inter-prediction partitioning for partition size 128x128, a threshold associated with Inter-prediction partitioning for partition size 64x64, a threshold associated with Inter-prediction partitioning for partition size 32x32. Adaptive threshold calculation 606 may determine one or more thresholds associated with Intra-prediction partitioning, e.g., a threshold associated with Intra-prediction partitioning for partition size 64x64, a threshold associated with Intra-prediction partitioning for partition size 32x32. Various thresholds can be used in decision points in a decision logic/tree for selecting a partition combination from a group of fixed/predetermined partition combinations. Exemplary operations of adaptive threshold calculation 606 are illustrated in FIG. 8. Adaptive threshold calculation 606 may perform determine QP and sharpness adaptive threshold in 704 of FIG. 7.

Partition combination decision 294 may include temporal variation calculation 604. Temporal variation calculation 604 may determine a temporal variation value of the CTU. Temporal variation calculation 604 may determine the temporal variation value in response to the frame type 622 indicating that the frame is not an Intra-frame, or a frame to be Inter-predicted.

Referring to FIG. 7, a check may be performed on frame type 622 to determine if the frame type 622 is Intra in 706. If the frame type 622 is not Intra, method 700 may proceed to 710, where temporal variation calculation 604 may determine a temporal variation value of the CTU. If the frame type 622 otherwise is Intra, method 700 may proceed to 708.

Referring back to FIG. 6, Temporal variation calculation 604 may determine a motion prediction cost value for one or more (32x32) blocks of the CTU. A motion prediction cost value is an estimated motion compensated cost of a block. A CTU of size 128x128 may have 16 32x32 blocks. A CTU of size 64x64 may have 4 32x32 blocks. Temporal variation calculation 604 may determine a motion prediction cost value for a 32x32 block of the CTU. Temporal variation calculation 604 may determine a motion prediction cost value for each 32x32 block of the CTU. Temporal variation calculation 604 perform motion search on a down sampled or downscaled version of the frame. In some embodiments, the frame is 4X down sampled, and thus, a 32x32 block of the CTU is down sampled to 8x8 block. Temporal variation calculation 604 may perform 8x8 block motion search to find a reference with a minimum Inter-prediction cost for (each) 8x8 block (a down sampled version of a 32x32 block of the CTU). The minimum Inter-prediction cost value is used as the motion prediction cost value, *Vᵢ*, for a 32x32 block (or down sampled 8x8 block) of the CTU. The temporal variation value for the CTU, *V_{final},* is the maximum value among (all) the motion prediction cost values of the 32x32 blocks (or down sampled 8x8 blocks) in the CTU: ${V}_{final} = {argmax}_{i} \left\{{V}_{i}\right\}$

The maximum motion prediction cost value among all the 8x8 blocks in the current down sampled CTU is used as the temporal variation value.

In some cases, the temporal variation value of the CTU may be the minimum value among the motion prediction cost values. In some cases, the temporal variation value of the CTU may be the mean, mode, or median value among the motion prediction cost values. In some cases, the temporal variation value of the CTU may be a characteristic value among the motion prediction cost values.

Temporal variation calculation 604 may calculate one or more motion prediction cost values for one or more blocks of the coding tree unit. Temporal variation calculation 604 may select a maximum motion prediction cost value from the one or more motion prediction cost values as the temporal variation value of the coding tree unit.

The one or more motion prediction cost values may be provided to thresholding and partition combination selection 608. The temporal variation value for the CTU may be provided to thresholding and partition combination selection 608.

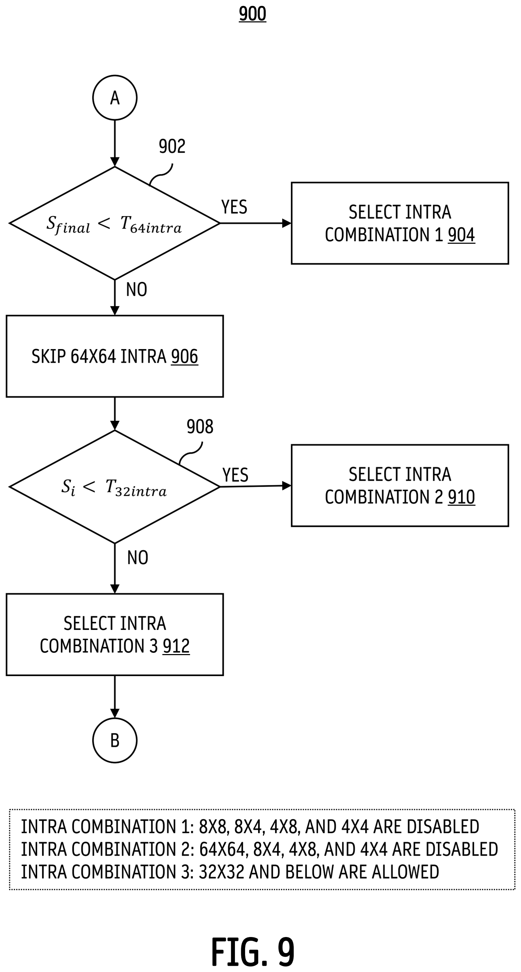

In response to frame type 622 being Intra-predicted, one or more block sharpness values of one or more 32x32 blocks of the CTU and the sharpness value of the CTU can be used by thresholding and partition combination selection 608 to select an Intra partition combination from a group of fixed/predetermined partition combinations. Thresholding and partition combination selection 608 can compare the one or more block sharpness values of one or more 32x32 blocks of the CTU and the sharpness value of the CTU against one or more thresholds. Exemplary operations of thresholding and partition combination selection 608 to select an Intra partition combination are illustrated in FIG. 9. Thresholding and partition combination selection 608 may perform select partition combination based on threshold and spatial sharpness in 708 of FIG. 7.

In some embodiments, thresholding and partition combination selection 608 selects a partition combination from a group of one or more predetermined partition combinations based on the one or more thresholds and the sharpness value. In some embodiments, thresholding and partition combination selection 608 selects a partition combination from a group of one or more predetermined partition combinations based on the one or more thresholds, one or more block sharpness values, and the sharpness value. The partition combination has or includes one or more predetermined candidate partitions.

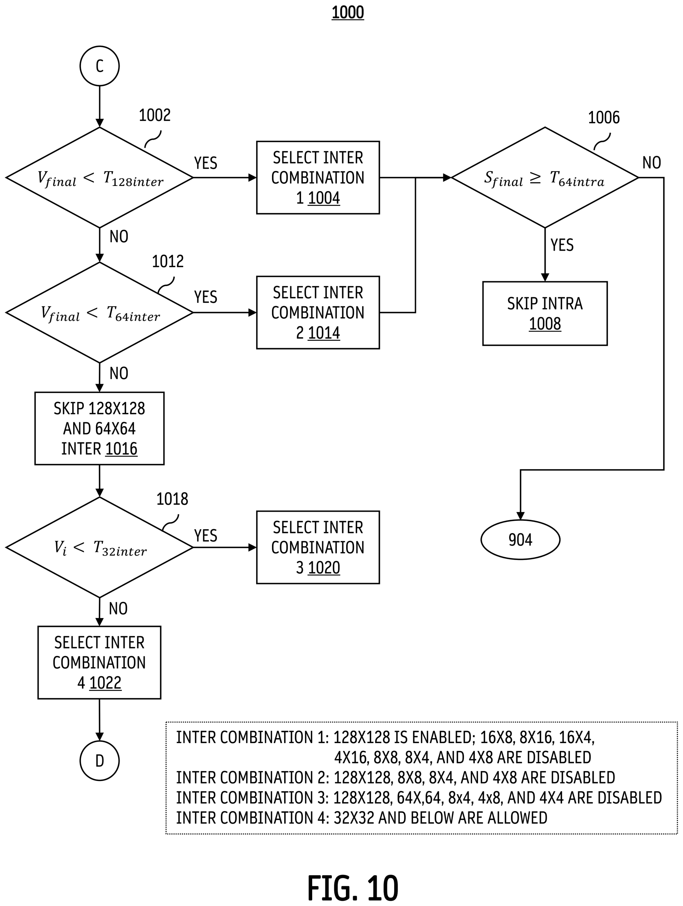

In response to frame type 622 being Inter-predicted (not Intra-predicted), the one or more motion prediction cost values of one or more 32x32 blocks of the CTU and the temporal variation value of the CTU can be used by thresholding and partition combination selection 608 to select an Inter partition combination from a group of fixed/predetermined partition combinations. Thresholding and partition combination selection 608 can compare one or more motion prediction cost values of one or more 32x32 blocks of the CTU and the temporal variation value of the CTU against one or more thresholds. In some embodiments, one or more block sharpness values of one or more 32x32 blocks of the CTU and/or the sharpness value of the CTU can be used by thresholding and partition combination selection 608 to determine whether to skip Intra-prediction or not. Thresholding and partition combination selection 608 can compare the one or more block sharpness values of one or more 32x32 blocks of the CTU and/or the sharpness value of the CTU against one or more thresholds. Exemplary operations of thresholding and partition combination selection 608 to select an Inter partition combination and whether to skip Intra-prediction or not are illustrated in FIG. 10. Thresholding and partition combination selection 608 may perform select partition combination based on threshold, temporal variation, and (optionally) spatial sharpness in 712 of FIG. 7.

In some embodiments, thresholding and partition combination selection 608 selecting the partition combination from the group comprises selecting the partition combination further based on the temporal variation value. In some embodiments, thresholding and partition combination selection 608 selecting the partition combination from the group comprises selecting the partition combination further based on one or more motion prediction cost values and the temporal variation value. One or more values associated with temporal variation and one or more values associated with spatial sharpness are used jointly to select Inter partition combinations and Intra partition combinations.

After thresholding and partition combination selection 608 decides the partition combination, encoder 102 encodes the CTU according to a candidate partition selected from the partition combination.

To select a candidate partition, rate-distortion optimization (RDO) 680 in encoder 102 may perform RDO of the one or more predetermined candidate partitions of the selected partition combination. RDO 680 may select a partition to use for encoding the CTU from the one or more predetermined candidate partitions of the partition combination based on the rate-distortion optimization. RDO 680 may select one or more coding tools to use for encoding the CTU from the one or more candidate coding tools based on the rate-distortion optimization. RDO 680 may perform RDO in 714 of FIG. 7.

In some embodiments, RDO 680 may balance the trade-off between compression efficiency and video quality. RDO 680 may select the optimal encoding parameters to minimize the distortion (loss of quality) for a given bitrate or, conversely, to achieve the best possible quality for a specified bitrate. RDO 680 evaluates different encoding options, such as different partitions of a CTU and possible coding tools and calculates their impact on both the bitrate and the resulting video quality. RDO 680 can choose the parameters that provide the best compromise between the two, ensuring that the encoded video maintains high visual fidelity while keeping the file size manageable.

In modern image and video coding standards, many advanced features (e.g., block partition decision) may not deliver savings without RDO 680 in encoder 102. The equation used in RDO 680 can be based on the Lagrangian multiplier method. The goal is to minimize the cost function, which combines both the bitrate (bit cost) and the distortion (quality loss). The distortion measure, D, is based on a sum of squared difference and/or mean squared error and the bitrate, R, includes all bits associated with the decision, including header, motion, side information, and transform data. By using P to denote the to be decided parameter vectors, the optimal solution is to solve the unconstrained Lagrangian formulation as follows: ${P}_{final} = {argmin}_{P} \left\{D\left(P\right)+λR\left(P\right)\right\}$

λ controls the rate-distortion trade-off. In some embodiments, λ is a function of QP 620 and frame type 622: $λ = f \left(QP, {frame}_{type}\right)$

### QP and/or sharpness adaptive thresholds

FIG. 8 is a flow diagram illustrating method 800 for determining one or more thresholds based on QP and (optionally) a sharpness value, according to some embodiments of the disclosure. Method 800 may be performed by adaptive threshold calculation 606 of FIG. 6.

In 802, a threshold T is initialized: $T = \left(λ+c\right) ∗ W$

c is a constant offset, and *W* is a constant weighting parameter. In other words, the initial threshold can be determined based on λ used in RDO 680 of FIG. 6. As discussed previously, λ is a function of QP 620. An initial threshold T is determined based on the QP.

In 804, a check is performed to determine whether the sharpness value for a CTU, *S_{final},* is less than a fixed/predetermined value, *B.*

In 806, the initial threshold is adjusted based on the sharpness value, in response to determining that *S_{final} < B* (in 804). The adjusted threshold, *Tₛ*, can be calculated as follows: ${T}_{s} = \left(1+\frac{B - S}{B}\right) ∗ T$

If *S_{final}* ≥ *B,* the initial threshold is used directly as the adjusted threshold.

In 808, one or more thresholds associated with Inter-prediction partitioning are determined based on the initial threshold or the adjusted threshold.

In some embodiments, a threshold associated with Inter-prediction partitioning for partition size 128x128, *T*₁₂₈*ᵢₙₜₑᵣ,* can be determined as follows: ${T}_{128 inter} = {T}_{s} / 2$

In some embodiments, a threshold associated with Inter-prediction partitioning for partition size 64x64, *T*₆₄*ᵢₙₜₑᵣ,* can be determined as follows: ${T}_{64 inter} = {T}_{s}$

In some embodiments, a threshold associated with Inter-prediction partitioning for partition size 32x32, *T*₃₂*ᵢₙₜₑᵣ,* can be determined as follows: ${T}_{32 inter} = 2 ∗ {T}_{s}$

In 810, one or more thresholds associated with Inter-prediction partitioning are determined based on the initial threshold or the adjusted threshold.

In some embodiments, a threshold associated with Intra-prediction partitioning for partition size 64x64, *T*₆₄*ᵢₙₜᵣₐ,* can be determined as follows: ${T}_{64 intra} = d ∗ {T}_{64 inter} = d ∗ {T}_{s}$

*d* is a constant weighting parameter.

In some embodiments, a threshold associated with Intra-prediction partitioning for partition size 32x32, *T*₃₂*ᵢₙₜᵣₐ,* can be determined as follows: ${T}_{32 intra} = d ∗ {T}_{32 inter} = d ∗ 2 {T}_{s}$

### Selecting an Intra partition combination

FIG. 9 is a flow diagram illustrating method 900 for selecting a partition combination, according to some embodiments of the disclosure. Method 900 may begin at A and end at B. Method 900 may be performed by thresholding and partition combination selection 608 of FIG. 6. Method 900 may be performed for selecting an Intra-prediction partition combination for an Intra-frame.

Method 900 may include comparing the sharpness value (or one or more block sharpness values) against the one or more thresholds and selecting the partition combination based on the comparing. A group of fixed/predefined Intra-prediction partition combinations may include:
- Intra combination 1: 8x8, 8x4, 4x8, and 4x4 are disabled, others are allowed,
- Intra combination 2: 64x64, 8x4, 4x8, and 4x4 are disabled, others are allowed, and
- Intra combination 3: 32x32 and below are allowed.

In 902, a check is performed to determine if the sharpness value for the CTU is less than a threshold associated with Intra-prediction partitioning for partition size 64x64, *S_{final}* < *T*₆₄*ᵢₙₜᵣₐ.* If yes, method 900 proceeds to 904. If no, method 900 proceeds to 906.

In 904, Intra partition combination 1 is selected.

In 906, partitioning at 64x64 for Intra-prediction is skipped.

In 908, a check is performed to determine if a block sharpness value of a 32x32 block in the CTU is less than a threshold associated with Intra-prediction partitioning for partition size 32x32, *Sᵢ* < *T*₃₂*ᵢₙₜᵣₐ.* If yes, method 900 proceeds to 910. If no, method 900 proceeds to method 900 of FIG. 9.

In 910, Intra partition combination 2 is selected.

In 912, Intra partition combination 3 is selected.

### Selecting an Inter partition combination

FIG. 10 is a flow diagram illustrating a method for selecting a partition combination, according to some embodiments of the disclosure. Method 1000 may begin at C and end at D. Method 1000 may be performed by thresholding and partition combination selection 608 of FIG. 6. Method 1000 may be performed for selecting an Inter-prediction partition combination and/or an Intra-prediction partition combination for a non-Intra frame or an Inter-frame.

Method 1000 may include comparing the temporal value (or one or more motion prediction cost values) against the one or more thresholds, e.g., in response to a frame type of the frame being an Inter-predicted frame, and selecting the partition combination based on the comparing. Method 1000 may further include comparing the temporal variation value against a threshold. A group of fixed/predefined Inter-prediction partition combinations may include:
- Inter combination 1: 128x128 is enabled; 16x8, 8x16, 16x4, 4x16, 8x8, 8x4, and 4x8 are disabled, others are allowed,
- Inter combination 2: 128x128, 8x8, 8x4, and 4x8 are disabled, others are allowed,
- Inter combination 3: 128x128, 64x64, 8x4, 4x8, and 4x4 are disabled, others are allowed, and
- Inter combination 4: 32x32 and below are allowed.

In 1002, a check is performed to determine if the temporal variation value for the CTU is less than a threshold associated with Inter-prediction partitioning for partition size 128x128, *V_{final}* < *T*₁₂₈*ᵢₙₜₑᵣ.* If yes, method 1000 proceeds to 1004. If no, method 1000 proceeds to 1012.

In 1004, Inter partition combination 1 is selected.

In 1006, a check is performed to determine if the sharpness value for the CTU is greater than (or equal to) a threshold associated with Intra-prediction partitioning for partition size 64x64, *S_{final}* ≥ *T*₆₄*ᵢₙₜᵣₐ.* If yes, method 1000 proceeds to 1008. If no, method 1000 proceeds to 904 of FIG. 9.

In 1008, Intra-prediction is skipped for the CTU.

In 1012, a check is performed to determine if the temporal variation value for the CTU is less than a threshold associated with Inter-prediction partitioning for partition size 64x64, *V_{final}* < *T*₆₄*ᵢₙₜₑᵣ.* If yes, method 1000 proceeds to 1014. If no, method 1000 proceeds to 1016.

In 1014, Inter partition combination 2 is selected.

In 1016, partitioning at 128x128 and 64x64 for Inter-prediction are skipped.

In 1018, a check is performed to determine if a motion prediction cost value of a 32x32 block in the CTU is less than a threshold associated with Inter-prediction partitioning for partition size 32x32, *Vᵢ < T*₃₂*ᵢₙₜₑᵣ.* If yes, method 1000 proceeds to 1020. If no, method 1000 proceeds to 1022.

In 1020, Inter partition combination 3 is selected.

In 1022, Inter partition combination 4 is selected.

The partition combinations illustrated in FIGS. 9-10 are illustrative, and it is envisioned that other partition combinations can be predetermined/fixed.

### Methods for selecting an optimal partition combination

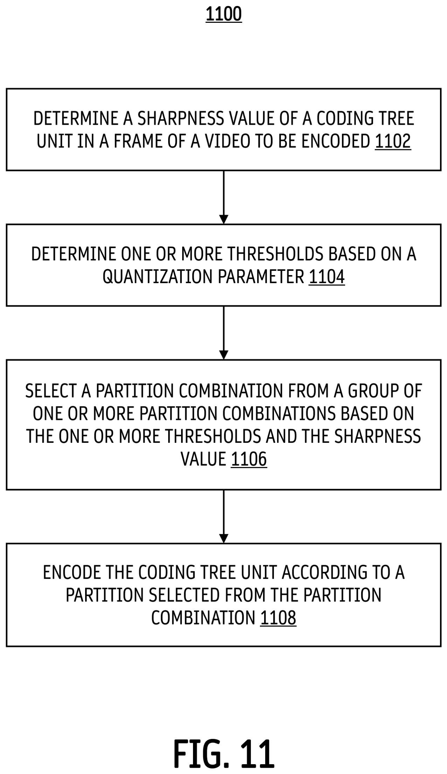

FIG. 11 is a flow diagram illustrating method 1100 for selecting a partition combination, according to some embodiments of the disclosure. Method 1100 can be carried out by one or more components of partition combination decision 294 and/or one or more components of encoder 102 of the FIGS.

In 1102, partition combination decision 294 may determine a sharpness value of a CTU in a frame of a video to be encoded by encoder 102.

In 1104, partition combination decision 294 may determine one or more thresholds based on a QP.

In 1106, partition combination decision 294 may select a partition combination from a group of one or more predetermined partition combinations based on the one or more thresholds and the sharpness value. The partition combination can include one or more predetermined candidate partitions.

In 1108, encoder 102 may encode the CTU according to a candidate partition selected from the partition combination.

### Exemplary computing device

FIG. 12 is a block diagram of an apparatus or a system, e.g., an exemplary computing device 1200, according to some embodiments of the disclosure. One or more computing devices 1200 may be used to implement the functionalities described with the FIGS. and herein. A number of components are illustrated in FIG. 12 can be included in the computing device 1200, but any one or more of these components may be omitted or duplicated, as suitable for the application. In some embodiments, some or all of the components included in the computing device 1200 may be attached to one or more motherboards. In some embodiments, some or all of these components are fabricated onto a single system on a chip (SoC) die. Additionally, in various embodiments, the computing device 1200 may not include one or more of the components illustrated in FIG. 12, and the computing device 1200 may include interface circuitry for coupling to the one or more components. For example, the computing device 1200 may not include a display device 1206, and may include display device interface circuitry (e.g., a connector and driver circuitry) to which a display device 1206 may be coupled. In another set of examples, the computing device 1200 may not include an audio input device 1218 or an audio output device 1208 and may include audio input or output device interface circuitry (e.g., connectors and supporting circuitry) to which an audio input device 1218 or audio output device 1208 may be coupled.

The computing device 1200 may include a processing device 1202 (e.g., one or more processing devices, one or more of the same type of processing device, one or more of different types of processing device). The processing device 1202 may include processing circuitry or electronic circuitry that process electronic data from data storage elements (e.g., registers, memory, resistors, capacitors, quantum bit cells) to transform that electronic data into other electronic data that may be stored in registers and/or memory. Examples of processing device 1202 may include a CPU, a GPU, a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1200 may include a memory 1204, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1204 includes one or more non-transitory computer-readable storage media. In some embodiments, memory 1204 may include memory that shares a die with the processing device 1202.

In some embodiments, memory 1204 includes one or more non-transitory computer-readable media storing instructions executable to perform operations described herein, such as operations illustrated in FIGS. 1-3, and 6, method 700, method 800, method 900, method 1000, and method 1100. In some embodiments, memory 1204 includes one or more non-transitory computer-readable media storing instructions executable to perform one or more operations of encoder 102. In some embodiments, memory 1204 includes one or more non-transitory computer-readable media storing instructions executable to perform one or more operations of partition combination decision 294. In some embodiments, memory 1204 includes one or more non-transitory computer-readable media storing instructions executable to perform one or more operations of RDO 680. In some embodiments, memory 1204 includes one or more non-transitory computer-readable media storing instructions executable to perform one or more operations of encoder 102. The instructions stored in memory 1204 may be executed by processing device 1202.

In some embodiments, memory 1204 may store data, e.g., data structures, binary data, bits, metadata, files, blobs, etc., as described with the FIGS. and herein. Memory 1204 may include one or more non-transitory computer-readable media storing one or more of: input frames to the encoder (e.g., video frames 104), intermediate data structures computed by the encoder, bitstream generated by the encoder (e.g., encoded bitstream 180), bitstream received by a decoder (e.g., encoded bitstream 180), intermediate data structures computed by the decoder, and reconstructed frames generated by the decoder. Memory 1204 may include one or more non-transitory computer-readable media storing one or more of: data received and/or data generated by partition combination decision 294. Memory 1204 may include one or more non-transitory computer-readable media storing one or more of: data received and/or data generated by method 1100 of FIG. 11.

In some embodiments, the computing device 1200 may include a communication device 1212 (e.g., one or more communication devices). For example, the communication device 1212 may be configured for managing wired and/or wireless communications for the transfer of data to and from the computing device 1200. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1212 may implement any of a number of wireless standards or protocols, including but not limited to Institute for Electrical and Electronic Engineers (IEEE) standards including Wi-Fi (IEEE 1202.10 family), IEEE 1202.16 standards (e.g., IEEE 1202.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 1202.16 compatible Broadband Wireless Access (BWA) networks are generally referred to as WiMAX networks, an acronym that stands for worldwide interoperability for microwave access, which is a certification mark for products that pass conformity and interoperability tests for the IEEE 1202.16 standards. The communication device 1212 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1212 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1212 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 1212 may operate in accordance with other wireless protocols in other embodiments. The computing device 1200 may include an antenna 1222 to facilitate wireless communications and/or to receive other wireless communications (such as radio frequency transmissions). Computing device 1200 may include receiver circuits and/or transmitter circuits. In some embodiments, the communication device 1212 may manage wired communications, such as electrical, optical, or any other suitable communication protocols (e.g., the Ethernet). As noted above, the communication device 1212 may include multiple communication chips. For instance, a first communication device 1212 may be dedicated to shorter-range wireless communications such as Wi-Fi or Bluetooth, and a second communication device 1212 may be dedicated to longer-range wireless communications such as global positioning system (GPS), EDGE, GPRS, CDMA, WiMAX, LTE, EV-DO, or others. In some embodiments, a first communication device 1212 may be dedicated to wireless communications, and a second communication device 1212 may be dedicated to wired communications.

The computing device 1200 may include power source / power circuitry 1214. The power source / power circuitry 1214 may include one or more energy storage devices (e.g., batteries or capacitors) and/or circuitry for coupling components of the computing device 1200 to an energy source separate from the computing device 1200 (e.g., DC power, AC power, etc.).

The computing device 1200 may include a display device 1206 (or corresponding interface circuitry, as discussed above). The display device 1206 may include any visual indicators, such as a heads-up display, a computer monitor, a projector, a touchscreen display, a liquid crystal display (LCD), a light-emitting diode display, or a flat panel display, for example.

The computing device 1200 may include an audio output device 1208 (or corresponding interface circuitry, as discussed above). The audio output device 1208 may include any device that generates an audible indicator, such as speakers, headsets, or earbuds, for example.

The computing device 1200 may include an audio input device 1218 (or corresponding interface circuitry, as discussed above). The audio input device 1218 may include any device that generates a signal representative of a sound, such as microphones, microphone arrays, or digital instruments (e.g., instruments having a musical instrument digital interface (MIDI) output).

The computing device 1200 may include a GPS device 1216 (or corresponding interface circuitry, as discussed above). The GPS device 1216 may be in communication with a satellite-based system and may receive a location of the computing device 1200, as known in the art.

The computing device 1200 may include a sensor 1230 (or one or more sensors). The computing device 1200 may include corresponding interface circuitry, as discussed above). Sensor 1230 may sense physical phenomenon and translate the physical phenomenon into electrical signals that can be processed by, e.g., processing device 1202. Examples of sensor 1230 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1200 may include another output device 1210 (or corresponding interface circuitry, as discussed above). Examples of the other output device 1210 may include an audio codec, a video codec, a printer, a wired or wireless transmitter for providing information to other devices, haptic output device, gas output device, vibrational output device, lighting output device, home automation controller, or an additional storage device.

The computing device 1200 may include another input device 1220 (or corresponding interface circuitry, as discussed above). Examples of the other input device 1220 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1200 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1200 may be any other electronic device that processes data.

### Select examples

Example 1 provides a method, including determining a sharpness value of a coding tree unit in a frame of a video to be encoded; determining one or more thresholds based on a quantization parameter; selecting a partition combination from a group of one or more predetermined partition combinations based on the one or more thresholds and the sharpness value, the partition combination including one or more predetermined candidate partitions; and encoding the coding tree unit according to a candidate partition selected from the partition combination.

Example 2 provides the method of example 1, where determining the sharpness value of the coding tree unit includes calculating one or more sharpness values for one or more blocks of the coding tree unit; and selecting a maximum sharpness value from the one or more sharpness values as the sharpness value of the coding tree unit.

Example 3 provides the method of example 1 or 2, further including determining a temporal variation value of the coding tree unit; where selecting the partition combination from the group includes selecting the partition combination further based on the temporal variation value.

Example 4 provides the method of example 3, where determining the temporal variation value includes calculating one or more motion prediction cost values for one or more blocks of the coding tree unit; and selecting a maximum motion prediction cost value from the one or more motion prediction cost values as the temporal variation value of the coding tree unit.

Example 5 provides the method of any one of examples 1-4, where determining the one or more thresholds includes determining an initial threshold based on the quantization parameter; and determining the one or more thresholds based on the initial threshold.

Example 6 provides the method of example 5, where determining the one or more thresholds further includes determining an adjusted threshold based on the sharpness value; where determining the one or more thresholds includes determining the one or more thresholds based on the adjusted threshold.

Example 7 provides the method of any one of examples 1-6, where selecting the partition combination from the group includes comparing the sharpness value against the one or more thresholds; and selecting the partition combination based on the comparing.

Example 8 provides the method of any one of examples 3-7, where selecting the partition combination from the group includes comparing the temporal variation value against the one or more thresholds; and selecting the partition combination based on the comparing.

Example 9 provides the method of any one of examples 1-8, where the one or more thresholds include one or more of: one or more thresholds associated with Inter-prediction partitioning and one or more thresholds associated with Intra-prediction partitioning.

Example 10 provides the method of any one of examples 1-9, further including performing rate-distortion optimization of the one or more predetermined candidate partitions of the partition combination; and selecting a partition to use for encoding the coding tree unit from the one or more predetermined candidate partitions of the partition combination based on the rate-distortion optimization.

Example 11 provides one or more non-transitory computer-readable media storing instructions that, when executed by one or more processors, cause the one or more processors to: determine a sharpness value of a coding tree unit in a frame of a video to be encoded; determine one or more thresholds based on a quantization parameter; select a partition combination from a group of one or more predetermined partition combinations based on the one or more thresholds and the sharpness value, the partition combination including one or more predetermined candidate partitions; and encode the coding tree unit according to a candidate partition selected from the partition combination.

Example 12 provides the one or more non-transitory computer-readable media of example 11, where determining the sharpness value of the coding tree unit includes calculating one or more sharpness values for one or more blocks of the coding tree unit; and selecting a maximum sharpness value from the one or more sharpness values as the sharpness value of the coding tree unit.

Example 13 provides the one or more non-transitory computer-readable media of example 11 or 12, where the instructions further cause the one or more processors to: determine a temporal variation value of the coding tree unit; where selecting the partition combination from the group includes selecting the partition combination further based on the temporal variation value.

Example 14 provides the one or more non-transitory computer-readable media of example 13, where determining the temporal variation value includes calculating one or more motion prediction cost values for one or more blocks of the coding tree unit; and selecting a maximum motion prediction cost value from the one or more motion prediction cost values as the temporal variation value of the coding tree unit.

Example 15 provides the one or more non-transitory computer-readable media of any one of examples 11-14, where determining the one or more thresholds includes determining an initial threshold based on the quantization parameter; and determining the one or more thresholds based on the initial threshold.

Example 16 provides the one or more non-transitory computer-readable media of example 15, where determining the one or more thresholds further includes determining an adjusted threshold based on the sharpness value; where determining the one or more thresholds includes determining the one or more thresholds based on the adjusted threshold.

Example 17 provides the one or more non-transitory computer-readable media of any one of examples 11-16, where selecting the partition combination from the group includes comparing the sharpness value against the one or more thresholds; and selecting the partition combination based on the comparing.

Example 18 provides the one or more non-transitory computer-readable media of any one of examples 13-17, where selecting the partition combination from the group includes comparing the temporal variation value against the one or more thresholds; and selecting the partition combination based on the comparing.

Example 19 provides the one or more non-transitory computer-readable media of any one of examples 11-18, where the one or more thresholds include one or more of: one or more thresholds associated with Inter-prediction partitioning and one or more thresholds associated with Intra-prediction partitioning.

Example 20 provides the one or more non-transitory computer-readable media of any one of examples 11-19, where the instructions further cause the one or more processors to: perform rate-distortion optimization of the one or more predetermined candidate partitions of the partition combination; and select a partition to use for encoding the coding tree unit from the one or more predetermined candidate partitions of the partition combination based on the rate-distortion optimization.

Example 21 provides an apparatus, including one or more processors; and one or more non-transitory computer-readable media storing instructions that, when executed by the one or more processors, cause the one or more processors to: determine a sharpness value of a coding tree unit in a frame of a video to be encoded; determine one or more thresholds based on a quantization parameter; select a partition combination from a group of one or more predetermined partition combinations based on the one or more thresholds and the sharpness value, the partition combination including one or more predetermined candidate partitions; and encode the coding tree unit according to a candidate partition selected from the partition combination.

Example 22 provides the apparatus of example 21, where determining the sharpness value of the coding tree unit includes calculating one or more sharpness values for one or more blocks of the coding tree unit; and selecting a maximum sharpness value from the one or more sharpness values as the sharpness value of the coding tree unit.

Example 23 provides the apparatus of example 21 or 22, where the instructions further cause the one or more processors to: determine a temporal variation value of the coding tree unit; where selecting the partition combination from the group includes selecting the partition combination further based on the temporal variation value.

Example 24 provides the apparatus of example 23, where determining the temporal variation value includes calculating one or more motion prediction cost values for one or more blocks of the coding tree unit; and selecting a maximum motion prediction cost value from the one or more motion prediction cost values as the temporal variation value of the coding tree unit.

Example 25 provides the apparatus of any one of examples 21-24, where determining the one or more thresholds includes determining an initial threshold based on the quantization parameter; and determining the one or more thresholds based on the initial threshold.

Example 26 provides the apparatus of example 25, where determining the one or more thresholds further includes determining an adjusted threshold based on the sharpness value; where determining the one or more thresholds includes determining the one or more thresholds based on the adjusted threshold.

Example 27 provides the apparatus of any one of examples 21-26, where selecting the partition combination from the group includes comparing the sharpness value against the one or more thresholds; and selecting the partition combination based on the comparing.

Example 28 provides the apparatus of any one of examples 23-27, where selecting the partition combination from the group includes comparing the temporal variation value against the one or more thresholds; and selecting the partition combination based on the comparing.

Example 29 provides the apparatus of any one of examples 21-28, where the one or more thresholds include one or more of: one or more thresholds associated with Inter-prediction partitioning and one or more thresholds associated with Intra-prediction partitioning.

Example 30 provides the apparatus of any one of examples 21-29, where the instructions further cause the one or more processors to: perform rate-distortion optimization of the one or more predetermined candidate partitions of the partition combination; and select a partition to use for encoding the coding tree unit from the one or more predetermined candidate partitions of the partition combination based on the rate-distortion optimization.

Example A provides a computer program product comprising instructions, that when executed by a processor, causes the processor to perform a method of any one of examples 1-10.

Example B provides an apparatus comprising means for performing a method of any one of examples 1-10.

Example C provides partition combination decision as described and illustrated herein.

Example E provides an encoder and partition combination decision as described and illustrated herein.

Example F provides an apparatus comprising computing circuitry for performing a method of any one of examples 1-10.

### Variations and other notes

Although the operations of the example method shown in and described with reference to FIGS. 1-3, and 6-11 are illustrated as occurring once each and in a particular order, it will be recognized that some operations may be performed in any suitable order and repeated as desired. Additionally, one or more operations may be performed in parallel. Furthermore, the operations illustrated in FIGS. 1-3, and 6-11 may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:
determining a sharpness value of a coding tree unit in a frame of a video to be encoded;
determining one or more thresholds based on a quantization parameter;
selecting a partition combination from a group of one or more predetermined partition combinations based on the one or more thresholds and the sharpness value, the partition combination comprising one or more predetermined candidate partitions; and
encoding the coding tree unit according to a candidate partition selected from the partition combination.

2. The method of claim 1, wherein determining the sharpness value of the coding tree unit comprises:
calculating one or more sharpness values for one or more blocks of the coding tree unit; and
selecting a maximum sharpness value from the one or more sharpness values as the sharpness value of the coding tree unit.

3. The method of claim 1 or 2, further comprising:
determining a temporal variation value of the coding tree unit;
wherein selecting the partition combination from the group comprises selecting the partition combination further based on the temporal variation value.

4. The method of claim 3, wherein determining the temporal variation value comprises:
calculating one or more motion prediction cost values for one or more blocks of the coding tree unit; and
selecting a maximum motion prediction cost value from the one or more motion prediction cost values as the temporal variation value of the coding tree unit.

5. The method of any one of claims 1-4, wherein determining the one or more thresholds comprises:
determining an initial threshold based on the quantization parameter; and
determining the one or more thresholds based on the initial threshold.

6. The method of claim 5, wherein determining the one or more thresholds further comprises:
determining an adjusted threshold based on the sharpness value;
wherein determining the one or more thresholds comprises determining the one or more thresholds based on the adjusted threshold.

7. The method of any one of claims 1-6, wherein selecting the partition combination from the group comprises:
comparing the sharpness value against the one or more thresholds; and
selecting the partition combination based on the comparing.

8. The method of any one of claims 3-7, wherein selecting the partition combination from the group comprises:
comparing the temporal variation value against the one or more thresholds; and
selecting the partition combination based on the comparing.

9. The method of any one of claims 1-8, wherein the one or more thresholds comprise one or more of: one or more thresholds associated with Inter-prediction partitioning and one or more thresholds associated with Intra-prediction partitioning.

10. The method of any one of claims 1-9, further comprising:
performing rate-distortion optimization of the one or more predetermined candidate partitions of the partition combination; and
selecting a partition to use for encoding the coding tree unit from the one or more predetermined candidate partitions of the partition combination based on the rate-distortion optimization.

11. One or more non-transitory computer-readable media storing instructions that, when executed by one or more processors, cause the one or more processors to perform a method according to any one of claims 1-10.

12. An apparatus, comprising:
one or more processors; and
one or more non-transitory computer-readable media storing instructions that, when executed by the one or more processors, cause the one or more processors to a method according to any one of claims 1-10.
